# EUROPEAN PATENT APPLICATION

(11) **EP 2 947 948 A1**
(43) Date of publication of application: **25.11.2015**
(21) Application number: 14250077.6
(22) Date of filing: 23.05.2014
(51) Int. Cl.: H04W 74/08

(54) **Full-duplex wireless communications**

(71) Applicant: British Telecommunications public limited company, London EC1A 7AJ (GB)
(72) Inventor: The designation of the inventor has not yet been filed
(74) Representative: Tuckett, William John

(57) **Abstract**

This invention provides a device and method of communicating over a shared wireless communications medium, the method comprising the steps of: receiving a first signal including a first packet from an external wireless communications device, wherein the first packet includes a header portion, decodable by a half-duplex wireless communications device, and a data portion; determining a transmission end time of the first signal from the header portion; and transmitting a second signal including a second packet to the external wireless communications device whilst receiving the first signal; wherein a transmission end time of the second signal is less than or equal to the transmission end time of the first signal

## Description

### Field of the Invention

The present invention relates to full-duplex wireless communications.

### Background to the Invention

Traditionally, a wireless communications link between a first device and second device supports communications in both directions by offering a plurality of channels, wherein each channel supports half-duplex operation. This full-duplex emulation is necessary in most wireless communications links as full-duplex operation on a single channel (which would offer increased bandwidth) would impair the data payload of a received signal to such an extent that it could not be recovered.

Many wireless communications networks comprising several wireless communications nodes use a contention based protocol to provide shared and fair access to a communications medium. This ensures that each node in the network contends for a particular channel and may only transmit to its intended recipient when the channel is idle. The combination of half-duplex operation in a single channel and the contention based protocol is used to promote a system in which only a single node may transmit on a particular channel in the communications network at any one time.

A well-known contention based protocol is Carrier Sense Multiple Access with Collision Avoidance, CSMA/CA. In this protocol, a first node sends a data packet to a second node by first sensing a channel to determine if it is idle or not. This is known as a Carrier Sense, CS. If it is determined that the medium is idle, then a transmission attempt may occur. If the medium is not idle, then the first node concludes that the particular channel is busy. The first node may then attempt to transmit on this channel once it has returned to an idle state and a random delay (known as a back-off timer) has elapsed.

The most common implementation of CSMA/CA is in the IEEE 802.11 family of standards (commonly known as Wi-Fi). The back-off timer is a random number of transmission time slots. Once this back-off timer reaches zero, the first node can initiate a transmission to the second node.

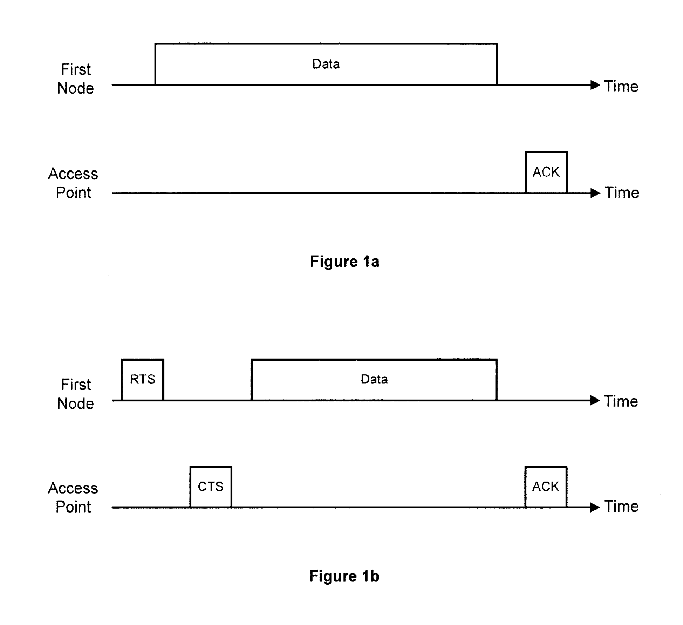

A schematic diagram.showing the basic structures of two forms of frame exchange are shown in Figures 1a and 1b. Figure 1a illustrates a frame exchange in which the first node transmits a data frame to the second node and, if successfully received, the second node sends an acknowledgement message to the first node. Figure 1b illustrates another form of frame exchange in which the first node transmits a Request To Send, RTS, message to the second node. The second node receives the RTS message and sends a Clear To Send, CTS, message to the first node. On receipt of the CTS message, the first node sends the data packet to the second node. Once the second node has received and successfully decoded the data packet from the first node, it sends an acknowledgement message to the first node.

The Wi-Fi implementation of the above frame exchange includes specific interframe spaces (i.e. DIFS and SIFS periods) and timeout values. However, the skilled person will understand that there are many variations of data frame exchanges that can be generalized to one of the above two forms.

Any node in a Wi-Fi wireless network which receives any one of these transmissions may decode a packet header and determine the identity of the intended recipient for that transmission and the duration of that transmission. These nodes may therefore conclude that they should not initiate their own transmissions for the duration of the frame exchange, reducing the possibility of interference in the network. The CSMA/CA protocol therefore tries to increase the probability that only a single node will transmit on the channel in any particular location and time. It also allows for many devices to share a channel without the need for any centralized scheduler.

The skilled person will understand that the RTS/CTS mechanism can help to solve the hidden and exposed nodes problems of wireless networks. Furthermore, if a collision occurs during the RTS/CTS exchange (i.e. if more than one station attempts to start a frame exchange at the same time), then only the duration of the RTS/CTS frames is wasted, rather than the time to transmit a date frame, plus its acknowledgement, which is typically much longer. The decision to use RTS/CTS typically depends on the size and duration of the data frame.

As noted above, full-duplex communications over a single channel in wireless communications networks are not generally used as the problem of successfully cancelling the transmitted signal from the received signal to recover its data payload had not, until recently, been solved (at least on a commercially viable level, e.g. using common wireless technology and setups). However, recent developments in wireless communications have illustrated that full-duplex communications over a single channel in a wireless communications network are possible using a self-interference cancellation circuit. These teachings include:
- "Full Duplex Radios", Dinesh Bharadia, Emily McMilin, and Sachin Katti of Stanford University and Kumu Networks (available at http://www.stanford.edu/~skatti/pubs/sigcomm13-fullduplex.pdf);
- "Achieving Single Channel, Full Duplex Wireless Communication", Jung II Choiy, Mayank Jainy, Kannan Srinivasany, Philip Levis and Sachin Katti - Proceedings of the 16th Annual International Conference on Mobile Computing and Networking (Mobicom 2010);
- "Full-Duplex Wireless Communications Using Off-The-Shelf Radios: Feasibility and First Results", Melissa Duarte and Ashutosh Sabharwal - Proceedings of the 44th Annual Asilomar Conference on Signals, Systems and Computers, 2010;
- "Picasso, Flexible RF and Spectrum Slicing", Steven Hong, Jeffrey Mehlman, Sachin Katti (available at http://www.stanford.edu/~skatti/pubs/sigcomm12-picasso.pdf); and
- "Efficient and Fair MAC for Wireless Networks with Self-Interference Cancellation", N. Singh, D. Gunarwardena, A. Protiere, B. Radunovic, H. V. Balan, and P. Key.

Several solutions have been proposed to implement these full-duplex, single channel wireless communications devices into contention based networks. A first example is illustrated in International Patent Application Publication No. WO 2013/179270 A1, which illustrates a data exchange over a wireless communications link. In this example, a first node sends an RTS message to a second node, which indicates the intention to transmit in full-duplex mode. The second node sends a CTS message to the first node, indicating that it is full-duplex enabled. On receipt, the first node sends a packet to the second node, including a novel packet header (indicating that the transmission is full-duplex) and the data payload. When receiving the data payload, the second node may transmit its packet to the first node.

A second example of full-duplex, single channel wireless communications in a contention based network is illustrated in US Patent Application Publication No. 2010/0232324 A1. In this document, the first node transmits a first signal including a first packet (including a packet header and data payload) to a second node, and the second node decodes the packet header to determine the length of the transmission. The second node selects a shorter packet to send to the first node (i.e. shorter than the first packet from the first node). The second node then sends a second signal to the first node, which includes a first portion including the shorter packet and a second portion including a busy tone. The busy tone is used to broadcast to other nearby nodes that the medium is in use. However, it is part of a new packet structure, which requires a new type of control message plus a new timing structure which no longer has idle periods between messages.

Both these techniques therefore offer a new protocol to allow wireless communications networks to communicate using full-duplex, single channel mode. However, the present inventors have recognized a problem with these techniques. That is, whilst any device implementing this new protocol may operate in full-duplex, single channel mode, it may not be implemented into a wireless network having a conventional device (i.e. a device which may only communicate using existing contention based protocols, and is therefore not able to accept full-duplex, single channel communications or successfully decode a packet header of the new protocol). Accordingly, wireless networks will need to be replaced in their entirety in order to implement full-duplex, single channel communications using the techniques above.

It is therefore desirable to alleviate some or all of the above problems.

### Summary of the Invention

According to a first aspect of the invention, there is provided a method of communicating over a shared wireless communications medium, the method comprising the steps of: receiving a first signal including a first packet from an external wireless communications device, wherein the first packet includes a header portion, decodable by a half-duplex wireless communications device, and a data portion; determining a transmission end time of the first signal from the header portion; and transmitting a second signal including a second packet to the external wireless communications device whilst receiving the first signal; wherein a transmission end time of the second signal is less than or equal to the transmission end time of the first signal.

The present invention therefore allows full-duplex, single channel communications over a shared wireless communications medium which may be implemented in existing wireless communications networks. That is, the header portion of the first packet is of a conventional form, such that any node in the wireless communications network (whether full-duplex enabled or a conventional half-duplex node) may successfully decode the header portion. A receiving device which is full-duplex enabled may then determine a transmission end time of the first signal (including the first packet), such as by examining the duration/ID field of a conventional MAC header. The receiving device may then send a second signal whilst receiving the first signal, so long as the transmission end time of the second signal is before the transmission end time of the first signal. The receiving device therefore terminates its transmission at the end of the packet rather than sending a busy tone, which would have otherwise required a change to the protocol.

The header portion may be conventional in the sense that it may be decoded by any wireless communications device implementing half-duplex (or emulated full-duplex) communication methods. Furthermore, the header portion may be conventional in the sense that it contains no additional information or signalling specific to full-duplex operation or capabilities.

Furthermore, the skilled person will understand that the use of RTS/CTS messages are no longer required in order to solve the hidden node problem. In the prior art, RTS/CTS messages were used prior to the data transmission, such that any node outside the range of the transmitting node but inside the range of the receiving node will receive the CTS message and avoid using the channel. The present invention also solves this problem, as the transmission of the second signal from the second node to the first node will also be detected by the hidden node, preventing it from transmitting and interfering with the first and second signals. The present invention therefore can provide further capacity improvements in the wireless communications network when RTS/CTS messages are not used (which use up capacity in the network) to solve the hidden node problem for full-duplex, single channel transmissions. However, whilst non-essential, a wireless communications device implementing the method of the first aspect of the invention may still use RTS/CTS messages, for example, to provide protection against collisions (particularly long transmissions) and for additional help to solve issues with hidden and exposed nodes.

The method may further comprise the step of transmitting a first acknowledgement message for the first signal to the external wireless communications device. The method may also comprise the step of receiving a second acknowledgement message for the second signal from the external wireless communications device. The first acknowledgement message may be transmitted whilst the second acknowledgement message is being received. Thus, acknowledgement messages may be used, which may also be transmitted in full-duplex mode.

The second packet may have an extended data portion such that the transmission end time of the second signal equals the transmission end time of the first signal. The extended data portion may be detectable and removable by any full-duplex devices such that the data portion of the second packet may be received. The extended data portion provides further protection against hidden nodes and, by ensuring that the first and second signals' transmission end times are the same, it allows a SIFS time period before acknowledgements are sent. This gives maximum protection against any appearing or edge hidden nodes.

Also provided is a computer program having computer executable code which, when executed on a computer, causes the computer to perform the steps of the method of the first aspect of the invention.

According to a second aspect of the invention, there is provided a device for communicating over a shared access wireless communications medium, the device comprising a transceiver adapted to receive a first signal including a first packet from an external wireless communications device, the first packet including a header portion, decodable by a half-duplex wireless communications device, and a data portion; and a processor adapted to control the transceiver and to determine a transmission end time of the first signal from the header portion, wherein the transceiver is further adapted to transmit a second signal including a second packet to the external wireless communications device whilst receiving the first signal, wherein a transmission end time of the second signal is less than or equal to the transmission end time of the first signal. The transceiver may be further adapted to transmit a first acknowledgement message for the first signal to the external wireless communications device. The transceiver may be further adapted to receive a second acknowledgement message for the second signal from the external wireless communications device. The first acknowledgement message may be transmitted whilst the second acknowledgement message is being received.

The transceiver may be further adapted to receive a Request To Send, RTS, message from the external wireless communications device, and to send a Clear To Send, CTS, message to the external wireless communications device.

The second packet may have an extended data portion such that the transmission end time of the second signal equals the transmission end time of the first signal.

The first and second signals may conform to the Carrier Sense Multiple Access with Collision Avoidance, CSMA/CA, protocol. Common implementations of this protocol are in the IEEE 802.11 family of standards (informally known as the 802.11x standards, and cover the 802.11 standard and its various amendments including 802.11g, 802.11a, 802.11b 802.11n, 802.11ac, etc.). These are the standards most commonly used to implement Wireless Local Area Networks, WLANs, and the term Wi-Fi (a registered trade mark of the Wi-Fi Alliance) generally designates WLAN products and services which have been certified by the Wi-Fi Alliance as operating in accordance with the 802.11 family of standards. Other implementations of the CSMA/CA protocol include ECMA-392.

According to a third aspect of the invention, there is provided a method of communicating over a shared wireless communications medium, the method comprising the steps of: receiving a first signal including a first packet from an external wireless communications device, wherein the first packet includes a header portion, decodable by a half-duplex wireless communications device, and a data portion; determining a transmission end time of the first signal from the header portion; and transmitting a second signal including a second packet to the external wireless communications device whilst receiving the first signal; wherein a transmission end time of the second signal is up to the transmission end time of the first signal.

In a fourth aspect of the invention, there is provided a method of communicating over a shared wireless communications medium, the method comprising the steps of: receiving a first signal including a first packet from an external wireless communications device, wherein the first packet includes a header portion, decodable by a half-duplex wireless communications device, and a data portion; determining a transmission end time of the first signal from the header portion; and transmitting a second signal including a second packet to the external wireless communications device whilst receiving the first signal; wherein a transmission end time of the second signal is no later than a transmission end time of the first signal.

According to a fifth aspect of the invention, there is provided a device for communicating over a shared access wireless communications medium, the device comprising a transceiver adapted to receive a first signal including a first packet from an external wireless communications device, the first packet including a header portion, decodable by a half-duplex wireless communications device, and a data portion; and a processor adapted to control the transceiver and to determine a transmission end time of the first signal from the header portion, wherein the transceiver is further adapted to transmit a second signal including a second packet to the external wireless communications device whilst receiving the first signal, wherein a transmission end time of the second signal is up to the transmission end time of the first signal.

In a sixth aspect of the invention, there is provided a device for communicating over a shared access wireless communications medium, the device comprising a transceiver adapted to receive a first signal including a first packet from an external wireless communications device, the first packet including a header portion, decodable by a half-duplex wireless communications device, and a data portion; and a processor adapted to control the transceiver and to determine a transmission end time of the first signal from the header portion, wherein the transceiver is further adapted to transmit a second signal including a second packet to the external wireless communications device whilst receiving the first signal, wherein a transmission end time of the second signal is no later than the transmission end time of the first signal.

### Brief Description of the Figures

In order that the present invention may be better understood, embodiments thereof will now be described, by way of example only, with reference to the accompanying drawings in which:
Figures 1 a and 1 b illustrate a general form of a data frame exchange using a contention based protocol;
Figure 2 is a schematic diagram of a wireless communications network of a first embodiment of the present invention;
Figure 3 is a schematic diagram of an Access Point of the network of Figure 2;
Figure 4 is a schematic diagram of a first node of the network of Figure 2;
Figure 5 is a flow diagram of a method of a first embodiment of the present invention;
Figure 6a is a timing diagram for transmissions from Access Point to a first node;
Figure 6b is a timing diagram for transmissions from the Access Point to the first node,
including an initial RTS/CTS exchange;
Figure 7a is a timing diagram for transmissions from the Access Point to a second node;
Figure 7b is a timing diagram for transmissions from the Access Point to the second node, including an initial RTS/CTS exchange;
Figure 8a is a timing diagram for transmissions from the second node to the Access Point;
Figure 8b is a timing diagram for transmissions from the second node to the Access Point, including an initial RTS/CTS exchange;
Figure 9 is a schematic diagram of a wireless communications network of a second embodiment of the present invention;
Figure 10 is a flow diagram of a method of a second embodiment of the present invention; and
Figure 11 is a timing diagram of a second embodiment of the present invention.

### Detailed Description of Embodiments

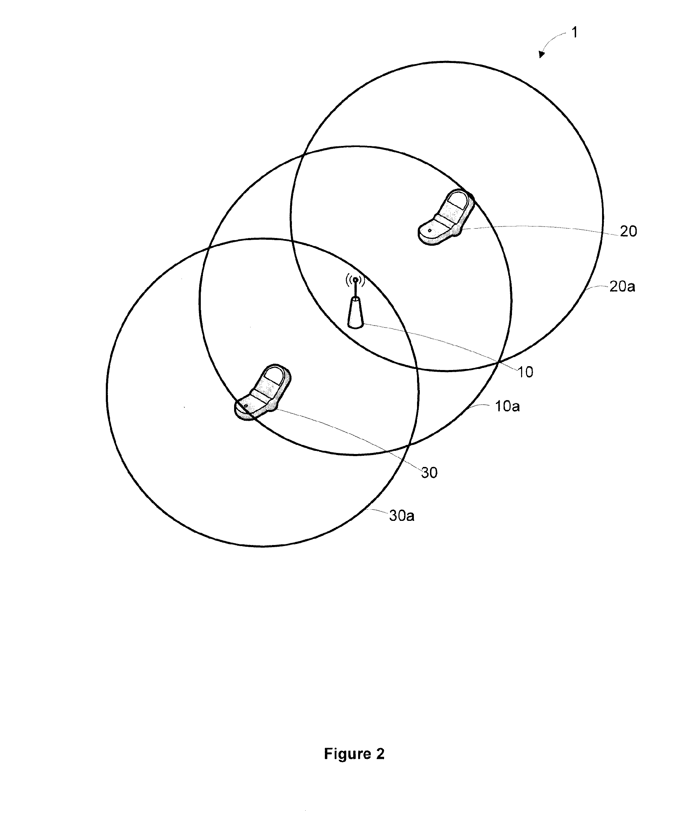

A first embodiment of a wireless communications network 1 of the present invention will now be described with reference to Figures 2 to 4. The wireless communications network 1 includes an Access Point 10 having coverage area 10a, a first node 20 having coverage area 20a, and a second node 30 having coverage area 30a. As shown in Figure 2, the Access Point's coverage area 10a covers both the first and second mobile terminals 20, 30, the first node's coverage area 20a covers the Access Point 10 but not the second node 30, and the second node's coverage area 30a covers the Access Point 10 but not the first node 20. The first and second nodes 20, 30 are therefore hidden nodes to one another when transmitting to the Access Point 10.

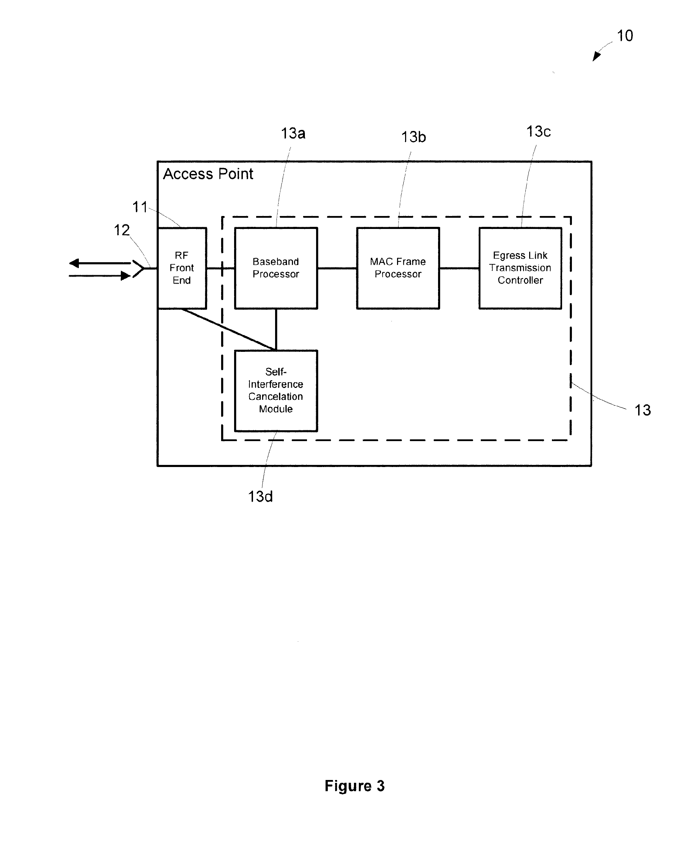

A schematic diagram of the Access Point 10 is shown in Figure 3. The Access Point 10 includes an RF front end 11 cooperating with an antenna 12 and a processor 13. The processor 13 comprises various modules, including a baseband processor 13a, MAC frame processor 13b, egress link transmission controller 13c and self-interference cancellation module 13d. As is known in the art, the RF front end 11 includes transmitter and receiver circuitry to process signals sent and received via the antenna 12, the baseband processor 13a acts as a mobile termination component adapted to perform common RF transmission functions (e.g. encoding, decoding, error detection etc.), and the egress link transmission controller 13c acts as a terminal equipment component adapted to process high level functions. In this embodiment, the Access Point 10 is configured to operate in accordance with the IEEE 802.11 family of standards (commonly known as Wi-Fi).

The self-interference cancellation module 13d is connected to both the RF front end 11 and the baseband processor 13a. This module allows the Access Point 10 to communicate in full-duplex mode over a single channel. A detailed description of how this module works is beyond the scope of this description, but may be found in other disclosures such as "Full Duplex Radios", by Bharadia, McMilin and Katti. To summarize this disclosure, the self-interference cancellation circuit derives a cancelation signal from an egress signal (i.e. a signal to be sent from the Access Point 10 to a node in the network 1) from the baseband processor 13a, and combines this cancellation signal with an ingress signal (i.e. a signal received by the Access Point 10 from a node in the network 1) from the RF front end 11. The cancellation signal cancels any interference on the ingress signal caused by the egress signal. To derive such a cancelation signal, the module 13d employs a hybrid circuit including both analogue and digital cancellation stages. The skilled person will understand that other methods of cancelling self-interference from the ingress signal are possible.

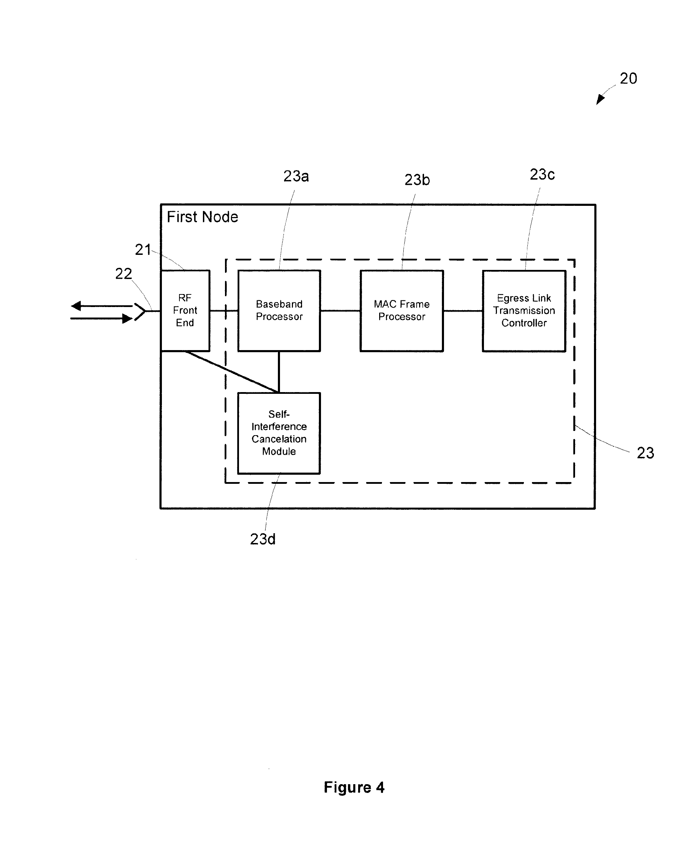

A schematic diagram of the first node 20 is shown in Figure 4. The first node 20 includes an RF front end 21 cooperating with an antenna 22 and a processor 23. The processor 23 comprises various modules, including a baseband processor 23a, MAC frame processor 23b, egress link transmission controller 23c and self-interference cancellation module 23d. As is known in the art, the RF front end 21 includes transceiver circuitry to process signals sent and received via the antenna 22, the baseband processor 23a acts as a mobile termination component adapted to perform common RF transmission functions (e.g. encoding, decoding, error detection etc.), and the egress link transmission controller 23c acts as a terminal equipment component adapted to process high level functions.

In this embodiment, the first node 20 is a mobile (i.e. cellular) telephone configured to operate in accordance with the IEEE 802.11 family of standards. However, the skilled person will understand that the first node 20 may be any form of device (e.g. any form of fixed computing device, such as a desktop computer, or mobile computing device, such as a laptop or tablet computer), configured to communicate with the Access Point 10.

The first node 20 also includes a self-interference cancelation module 23d, allowing the first node 20 to communicate in full-duplex, single channel mode in the same manner as described above in relation to the Access Point 10.

The skilled person will understand that the second node 30 includes many of the same modules as the first node 10. However, in this embodiment, the second node 30 does not include a self-interference cancelation module and is therefore only able to communicate via half-duplex or full-duplex emulation (i.e. half duplex over several channels).

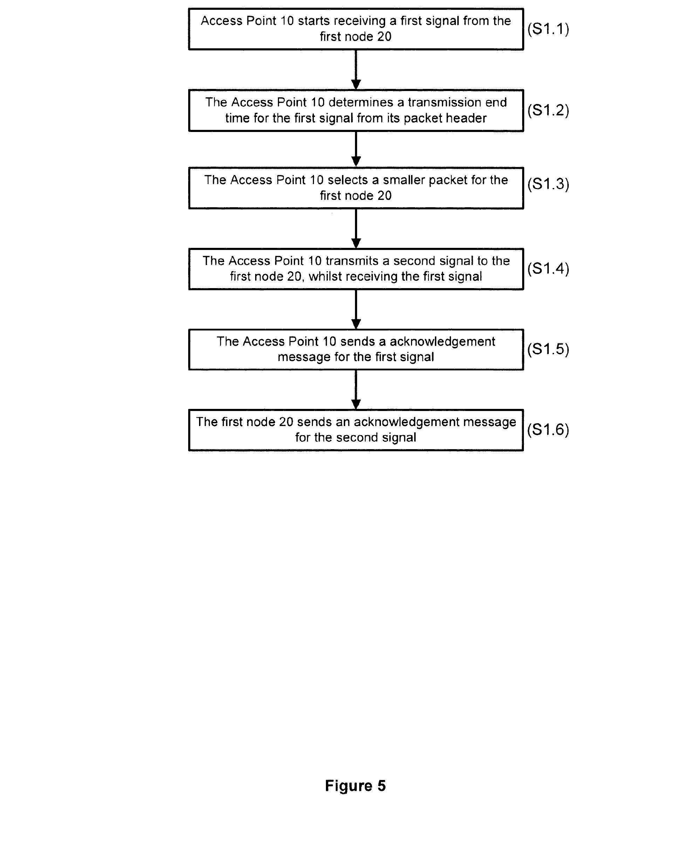

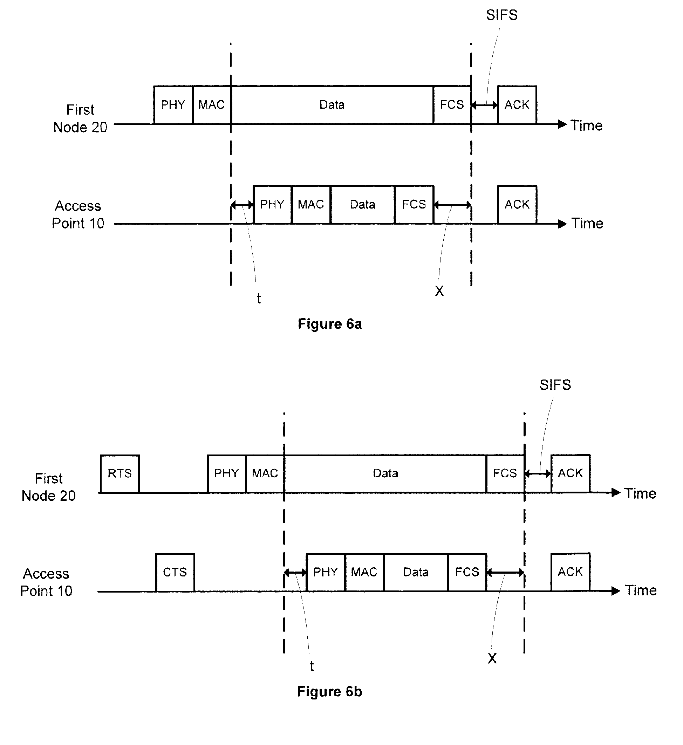

A method of operating the Access Point 10 and the first and second nodes 20, 30 in a contention based network will now be described with reference to Figures 5 and 6a. Figure 5 is a flow diagram illustrating the steps involved in a full-duplex, single channel communication between the Access Point 10 and the first node 20, and Figure 6a illustrates the corresponding timing diagram.

The first node 20 sends a first signal to the Access Point 10. The processor 23 of the first node 20 therefore configures a first data packet to be included in the first signal, which is sent to the RF front end 21 to be transmitted via the antenna 22. The Access Point 10 receives the first signal from the first node 10 via its antenna 12 and RF front end 11 (step S1.1).

The first signal is shown in the top level of the timing diagram of Figure 6a. As shown, the first packet of the first signal includes a packet header including a PHY header portion and a MAC header portion. These are constructed to conform with existing standards, such that they may be successfully decoded by the Access Point 10 (and any other legacy device that may roam into the network 1). As is known in the art, the MAC header contains a 'duration/ID' field. This field may take one of several forms, but in general indicates the transmission end time of the first frame exchange. The Access Point 10 may therefore determine the transmission end time of the first signal by decoding the packet header of the first signal (step S1.2). Following the MAC header, the first packet also includes a data payload portion and an FCS tail.

The Access Point 10 determines that it has at least one packet to be sent to the first node 20. The Access Point 10 then determines if any one of these packets may be transmitted to the first node 20 such that transmission of the packet to the first node 20 will finish before it finishes receiving the first packet from the first node 20. In step S1.3, the Access Point 10 selects a second packet (also having PHY and MAC header portions, a data payload and FCS tail) and transmits a second signal including the second packet to the first node 20 whilst receiving the first signal (step S1.4).

As shown in the timing diagram of Figure 6a, the second signal is transmitted to the first node 20 before the transmission end time of the first signal from the first node 20, such that there is a period between the end of the second signal and the end of the first signal when the Access Point 10 is not transmitting (time 'X'). Also shown is a delay between the Access Point 10 decoding the MAC header to determine the transmission end time and sending the second signal including the second packet (time 't'). The Access Point 10 must therefore select a second packet for which the total transmission time of the second packet is less than the time between the transmission end time of the first signal and the end of the MAC header, minus the delay time, t. The data packet of the second signal may be extended such that the transmission end time of the second signal is at the same time as the transmission end time of the first signal (i.e. X=0). This can allow for increased protection against hidden nodes. The full-duplex enabled device may therefore include the ability to identify the data extension and remove it from the end of any received data packet.

As noted above, the Access Point 10 may successfully receive the first signal and recover the data payload of the first packet by using its self-interference cancelation module, and similarly the first node 20 may successfully receive the second signal and recover the data payload of the second packet by using its self-interference cancelation module. As shown in Figure 6a, the second signal is selected based on its transmission end time being before the transmission end time of the first signal. Accordingly, the channel becomes idle as soon as the first signal is fully transmitted. Any other node in the network 1 which received the first signal (and thus decoded the MAC header and also knew the end time of the first frame exchange), may transmit over the channel without incurring any interference (which would otherwise occur if the transmission of the second packet to the first node 10 ended after the transmission end time of the first signal). Accordingly, the method of the present invention allows full-duplex, single channel communications in a network, without having to modify the packet header.

Furthermore, the second signal acts in a similar manner to the CTS message of the prior art in order to solve the hidden node problem. The second node 30 is outside the range of the first node 10, such that it cannot receive the first signal and therefore is not aware that the channel is in use. However, as it may receive the second signal (as both the first and second nodes 20, 30 are within range of the Access Point 10), it will determine that the channel is not idle during a Carrier Sense operation and will therefore not transmit any signals on this channel at this time. In addition the second node can find out the remaining duration of the ongoing frame exchange by reading the MAC header of the second signal.

To provide further protection against hidden nodes, the first node 20 and Access Point 10 may exchange RTS and CTS frames before the data transmission (as shown in Figure 6b).

In this embodiment, the Access Point 10 and first node 20 are configured to send acknowledgement messages for the first and second signals. Accordingly, the first node 20 waits a SIFS period before sending an acknowledgement message to the Access Point 10 indicating that the second signal has been successfully received (step S1.5), and the Access Point 10 waits a SIFS plus X period before sending an acknowledgement to the first node 20 indicating that the first signal has been successfully received (step S1.6). The delay X is used to ensure that the two acknowledgement messages are sent and received at the same time. This is advantageous as any other node in the network would only expect acknowledgement messages to be sent on the channel a SIFS period after the transmission end time of the first signal.

Once the exchange of the first and second signals are complete, the channel is idle once again and the Access Point 10 or first or second nodes 20, 30 may use the channel.

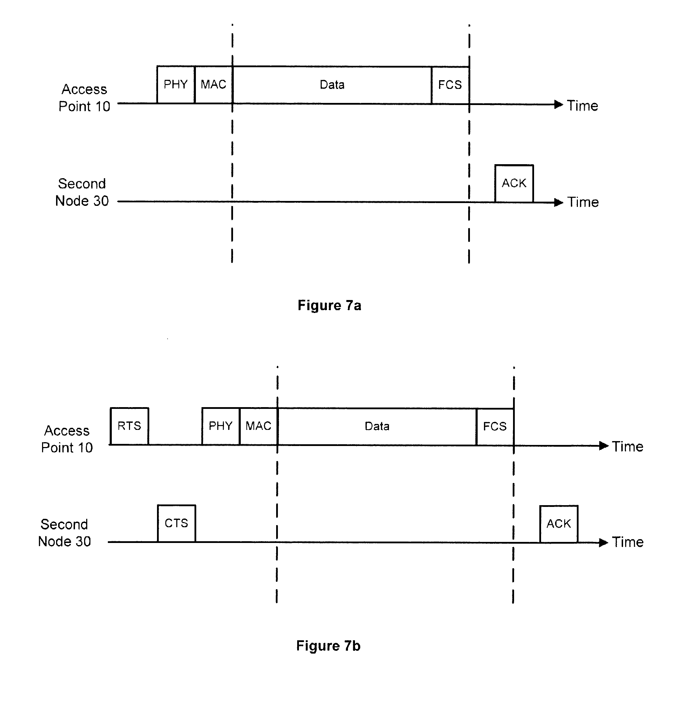

An example of the Access Point 10 transmitting to the second node 30 will now be described with reference to Figure 7a. In this example, the Access Point 10 transmits a first signal to the second node, which includes a packet header having PHY and MAC header portions, a data payload and FCS tail. The second node 30 receives the first signal in the usual manner. However, as noted above, the second node 30 is not configured for full-duplex, single channel communications as it does not include a self-interference cancelation module (i.e. it is a "legacy" device), and therefore does not transmit a signal back to the Access Point.

Once the second node 30 has successfully received the first signal, it transmits an acknowledgement message to the Access Point 10. The skilled person will therefore understand from this example that nodes configured for full-duplex communications (e.g. the Access Point 10) may communicate with legacy devices in the usual half-duplex manner.

Figure 7b illustrates a further example of the Access Point 10 transmitting to the second node 30, but with an initial RTS/CTS exchange.

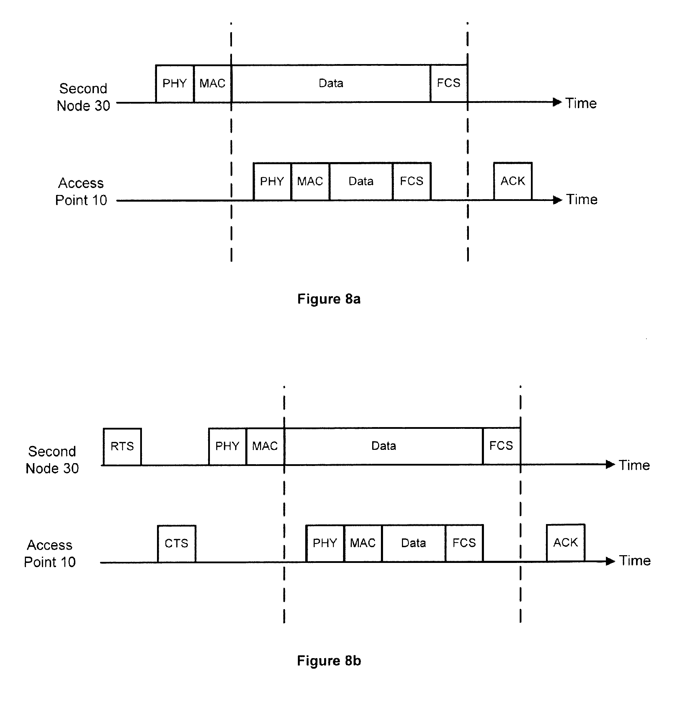

An example of the second node 30 transmitting to the Access Point 10 will now be described with reference to Figure 8a. In this example, the second node 30 transmits a first signal to the Access Point 10, which includes a packet header having PHY and MAC header portions, a data payload and FCS tail. The Access Point 10 receives the first signal and decodes the MAC header to determine the transmission end time of the first signal. As noted above, the second node 30 is not configured for full-duplex, single channel communications as it does not include a self-interference cancelation module. However, in this example, the Access Point 10 is not aware of the second node's 30 capabilities and therefore selects a second packet to send to the second node 30.

The second node 30 may continue to transmit the first signal to the Access Point 10, but is not configured to receive the second signal. However, as the Access Point 10 has a self-interference cancelation module 13d, it is still able to decode the first packet and successfully recover the data payload.

In this example, the second node 30 does not send an acknowledgment message to the Access Point 10. The Access Point 10 may determine from the lack of acknowledgement message that the second signal has not been received and thus the second node 30 may not be configured for full-duplex, single channel operation.

In this example, the two nodes still communicate in half-duplex mode (further illustrating how the present invention may work with legacy devices), but the transmission of the second signal from the Access Point 10 to the second node 30 provides protection against hidden nodes. For further protection, the frame exchange may also include initial RTS/CTS messages (as shown in the example in Figure 8b).

The Access Point 10 may further comprise a memory including a database of nodes in the network 1 (e.g. listed by MAC address), indicating whether each node is capable of full-duplex, single channel communications. For future communications, the Access Point 10 may therefore only select packets to send to other nodes which are full-duplex, single channel mode enabled by consulting the database. It may still choose to send a return message, such as a 'dummy' data packet having no real data, simply for the purposes of adding additional protection against hidden nodes.

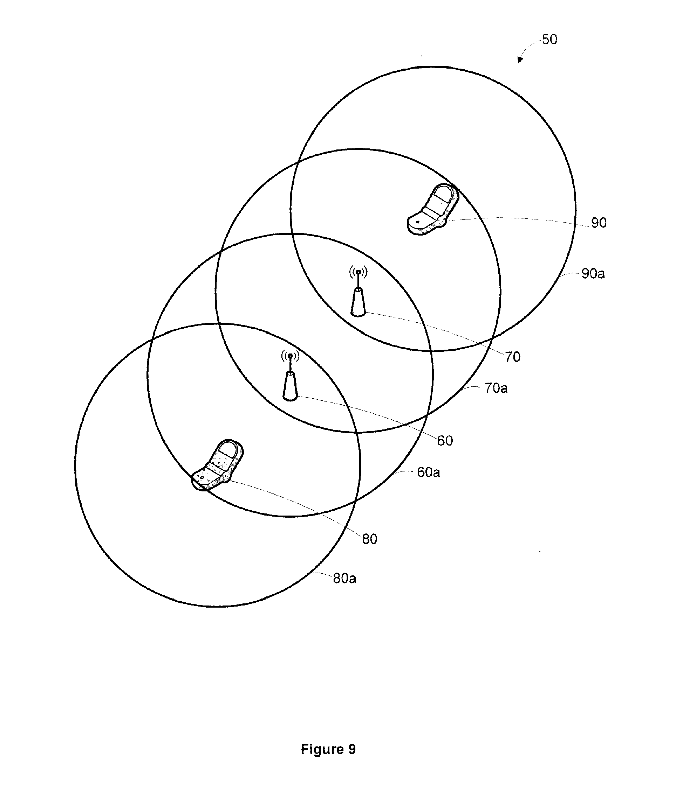

A second embodiment of a wireless communications network 50 of the present invention will now be described with reference to Figure 9. The network 50 includes a first and second Access Point 60, 70 having first and second coverage areas 60a, 70a respectively, and first and second nodes 80, 90 having first and second coverage areas 80a, 90a respectively. The first Access Point's coverage area 60a covers both the second Access Point 70 and the first node 80, the second Access Point's coverage area 70a covers both the first Access Point 60 and the second node 90, the first node's coverage area 80a covers the first Access Point 60 and the second node's coverage area 90a covers the second Access Point 70.

The skilled person will therefore understand that the network 50 of the second embodiment may suffer from the exposed node problem. That is, if the first Access Point 60 transmits a signal to the first node 80, the second Access Point 70 will conclude that it is not able to transmit a signal to the second node 90 at the same time as it believes the channel is occupied. However, as the second node 90 is outside the range of the first Access Point 60 and first node 80, a signal between the second Access Point 70 and second node 90 will not cause any interference on the network 50. The network 50 is therefore wasting an opportunity to transmit a signal between the second Access Point 70 and the second node 90. This problem is solved by using RTS/CTS messages, as explained below.

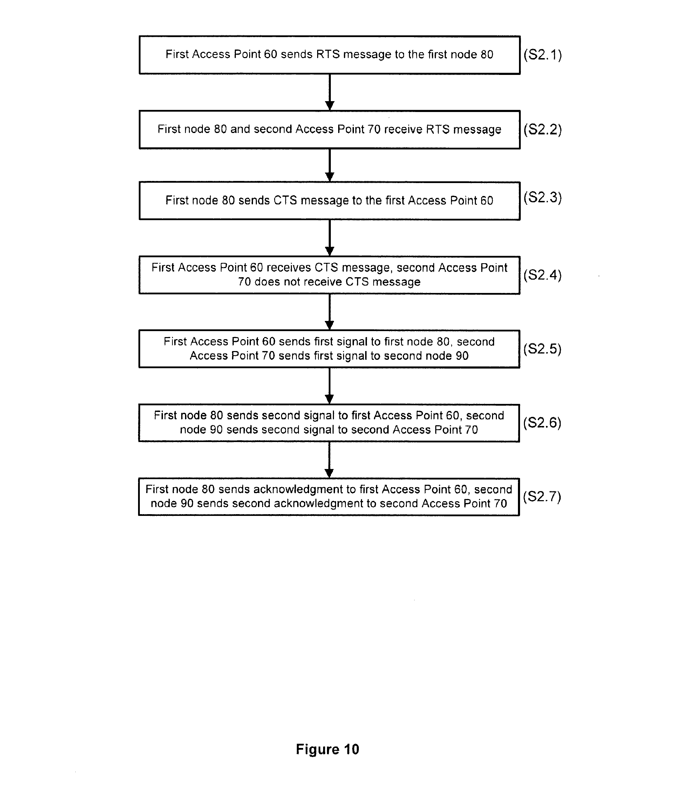

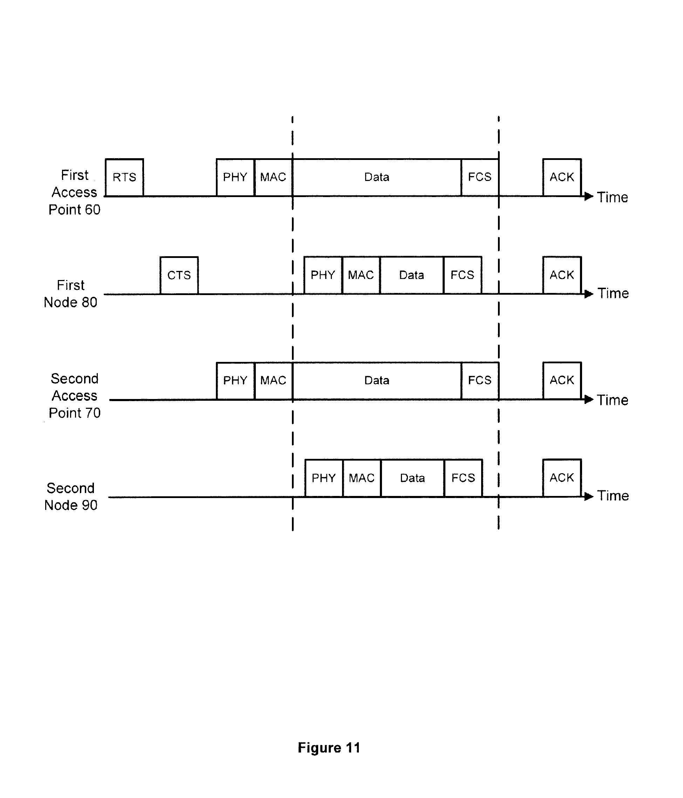

The Access Points 60, 70 are configured in the same manner as the Access Point 10 of the first embodiment, and the first and second nodes 80, 90 are configured in the same manner as the first node 20 of the first embodiment (i.e. they are both configured for full-duplex, single channel operation). All four network elements therefore include processing modules configured for full-duplex, single channel operation, and are configured to implement a second embodiment of a method of the present invention, as described below with reference to Figures 10 and 11.

In this embodiment, the first Access Point 60 has a packet to send to the first node 80, and the second Access Point 70 has a packet to send to the second node 90. As a first step (step S2.1), the first Access Point 60 sends an RTS message to the first node 80. Both the first node 80 and the second Access Point 70 receive the RTS message (step S2.2), but only the first node 80 knows it is the intended recipient by decoding the message.

At this point, the second Access Point 70 is not in a position to confirm whether or not it is in a position to send its packet to the second node 90.

In step S2.3 and as shown in Figure 10, the first node 80 sends a CTS message to the first Access Point 60. The first Access Point 60 receives the CTS message, but the second Access Point 70 is outside the coverage area of the first node 80 and therefore does not receive it (step S2.4). Once a predetermined period has expired (i.e. a defined period for a CTS message), the second Access Point 70 may determine that it is able to send its packet to the second node 90 without causing any interference between transmissions between the first Access Point 60 and the first node 80.

In steps S2.5 and S2.6, the first Access Point 60 sends a first signal to the first node 80, and the second Access Point 70 also sends a first signal to the second node 90 (this may also use an initial RTS/CTS exchange). In a similar manner to the first embodiment, the first and second nodes 80, 90 select packets for the first and second Access Points respectively and sends them before the transmission end times for the first and second signals (as shown in Figure 10). The first and second Access Points 60, 70 and first and second nodes 80, 90 then send acknowledgement messages to each other, as in the first embodiment (step S2.7).

The second embodiment therefore also uses RTS and CTS messages in the full-duplex, single channel communications links between four network elements in order to solve the exposed node problem. However, the skilled person will understand that the use of RTS and CTS messages is not essential, but is particularly advantageous in networks having exposed nodes.

In the above embodiments, acknowledgement messages are used to confirm that the data payload of a packet has been successfully received and decoded. These messages may be sent individually or in bulk. Furthermore, these messages are sent at the same time in the above embodiments. This is advantageous as it prevents signals being sent over the communications medium when they are not expected by other nodes, thus avoiding interference. However, the skilled person will understand that acknowledgement messages are non-essential.

The skilled person will also understand that there are a variety of ways that the transmission end time of a signal may be determined. In the above examples, a duration/ID portion of the MAC header is used. This may indicate a length of the transmission (either in units of time or number of frames), and the transmission end time may be calculated from this. The timing of the acknowledgement message, if used, can also be calculated from this.

In the above embodiments, the networks 1, 50 are configured to implement the CSMA/CA protocol. However, the skilled person will understand that the above method of determining a transmission end time from a conventional header portion and transmitting a full-duplex, single channel communication before this transmission end time is applicable to many forms of contention based protocols. These include the 802.11 family of standards and ECMA-392.

The skilled person will also understand that the steps of each embodiment of the present invention may be implemented by any suitable processing module or modules, rather than the particular configuration described above.

In the above embodiments, the various devices are disclosed as either Access Points or nodes, wherein one or more are half-duplex or full-duplex enabled. However, the skilled person will understand that these devices may be in any combination of half-duplex or full-duplex modes of operation and any combination of Access Point to Access Point, Access Point to/from node, or node to node configuration. Furthermore, whilst the above embodiments describe only a single RF chain for each device, the skilled person will understand that each device may have multiple RF chains and thus be configured for MIMO operation.

The skilled person will understand that any combination of features is possible within the scope of the invention, as claimed.

## Claims

1. A method of communicating over a shared wireless communications medium, the method comprising the steps of:
receiving a first signal including a first packet from an external wireless communications device, wherein the first packet includes a header portion, decodable by a half-duplex wireless communications device, and a data portion;
determining a transmission end time of the first signal from the header portion; and
transmitting a second signal including a second packet to the external wireless communications device whilst receiving the first signal;
wherein a transmission end time of the second signal is less than or equal to the transmission end time of the first signal.

2. A method as claimed in Claim 1, further comprising the steps of:
transmitting a first acknowledgement message for the first signal to the external wireless communications device.

3. A method as claimed in either Claim 1 or Claim 2, further comprising the steps of:
receiving a second acknowledgement message for the second signal from the external wireless communications device.

4. A method as claimed in Claim 3, wherein the first acknowledgement message is transmitted whilst the second acknowledgement message is being received.

5. A method as claimed in any one of the preceding claims, further comprising the initial steps of:
receiving a Request To Send, RTS, message from the external wireless communications device;
sending a Clear To Send, CTS, message to the external wireless communications device.

6. A method as claimed in any one of the preceding claims, wherein the second packet has an extended data portion such that the transmission end time of the second signal equals the transmission end time of the first signal.

7. A computer program including computer-executable code which, when executed on a computer, causes the computer to perform the steps of any one of Claims 1 to 6.

8. A device for communicating over a shared access wireless communications medium, the device comprising
a transceiver adapted to receive a first signal including a first packet from an external wireless communications device, the first packet including a header portion, decodable by a half-duplex wireless communications device, and a data portion; and
a processor adapted to control the transceiver and to determine a transmission end time of the first signal from the header portion,
wherein the transceiver is further adapted to transmit a second signal including a second packet to the external wireless communications device whilst receiving the first signal, wherein a transmission end time of the second signal is less than or equal to the transmission end time of the first signal.

9. A device as claimed in Claim 8, wherein the transceiver is further adapted to transmit a first acknowledgement message for the first signal to the external wireless communications device.

10. A device as claimed in either Claim 8 or Claim 9, wherein the transceiver is further adapted to receive a second acknowledgement message for the second signal from the external wireless communications device.

11. A device as claimed in Claim 10, wherein the first acknowledgement message is transmitted whilst the second acknowledgement message is being received.

12. A device as claimed in any one of Claims 8 to 11, wherein the transceiver is further adapted to receive a Request To Send, RTS, message from the external wireless communications device, and to send a Clear To Send, CTS, message to the external wireless communications device.

13. A device as claimed in any one of Claims 8 to 12, wherein the second packet has an extended data portion such that the transmission end time of the second signal equals the transmission end time of the first signal.
